# EUROPÄISCHE PATENTSCHRIFT

(11) **EP 3 597 573 B1**
(45) Veröffentlichungstag und Bekanntmachung des Hinweises auf die Patenterteilung: **21.12.2022**
(21) Anmeldenummer: 19177677.2
(22) Anmeldetag: 31.05.2019
(51) Int. Cl.: B65G 47/84, B65C 9/06

(54) **WERKSTÜCKTRÄGER FÜR BEHÄLTER IN EINER BEHANDLUNGSMASCHINE EINER ABFÜLLANLAGE UND VERFAHREN ZUM TRANSPORT UND ZUR POSITIONIERUNG DER BEHÄLTER**
WORKPIECE HOLDER FOR CONTAINERS IN A PROCESSING MACHINE OF A DISPENSING SYSTEM AND METHOD FOR TRANSPORT AND POSITIONING OF THE CONTAINER
PORTE-PIÈCE POUR RÉCIPIENTS DANS UNE MACHINE DE TRAITEMENT D'UNE INSTALLATION DE REMPLISSAGE ET PROCÉDÉ DE TRANSPORT ET DE POSITIONNEMENT DES RÉCIPIENTS

(30) Priorität: 17.07.2018 DE 102018211827
(43) Veröffentlichungstag der Anmeldung: 22.01.2020
(73) Patentinhaber: Krones AG, 93073 Neutraubling (DE)
(72) Erfinder: HOF, Reimund, 93073 Neutraubling (DE)
(74) Vertreter: Grünecker Patent- und Rechtsanwälte PartG mbB

(56) Entgegenhaltungen:
- EP-A1- 0 026 895
- EP-A1- 1 911 678
- DE-A1-102011 075 342
- JP-A- S5 841 032
- US-A- 4 747 482
- US-A- 5 255 776

## Beschreibung

Die Erfindung betrifft eine Behandlungsmaschine für Behälter und ein Verfahren zum Transport und zur Positionierung der Behälter.

In Abfüllanlagen werden Behälter, die sich aufgrund einer zu kleinen Standfläche und/oder einer ungeeigneten Bodenkontur nicht eigenständig stehend transportiert lassen, in Werkstückträgern transportiert und bei Behandlungsprozessen gehandhabt, siehe beispielsweise DE 10 2011 075 342 A1.

Aus der US 5 255 776 A und der US 4 747 482 A1 sind ferner jeweils Transportsysteme für Garnrollen bekannt, die auf um Hochachsen drehbare Wellen / Dorne geschoben werden, welche Bestandteile einzelner Träger / Schlitten für die Garnrollen sind. Die zentralen Wellen / Dorne eignen sich prinzipiell auch zur Aufnahme und Zentrierung von Behältern, wie beispielsweise Probenröhrchen.

Es kann es jedoch vorkommen, dass Behälter von den Werkzeugträgern auch in Bereichen eingefasst sind, die eigentlich einer Etikettierung oder einem Bedrucken zugänglich sein müssten. Wie beispielsweise aus der DE 20 2016 100 863 U1 bekannt ist, kann man als Behelf Hebesterne einsetzen, die den Behälter zur Behandlung vorübergehend aus dem Werkzeugträger heben und danach wieder in diesen einsetzen.

Nachteilig sind jedoch vergleichsweise hohe apparative Aufwand mit entsprechenden Kosten und der zusätzliche Platzbedarf für derartige Hebesterne. Zudem ist eine Beschädigung des behandelten Behälters beim Zurücksetzen in den Werkzeugträger nicht auszuschließen. Problematisch ist zudem eine stabile Führung des Werkzeugträgers bei einer Behandlung des Behälters, die dessen Drehung um seine Längsachse erfordert. Führungselemente dürfen dann nicht in den Arbeitsbereich der Behandlungsaggregate gedreht werden, um Kollisionen mit empfindlichen Bauteilen der Aggregate zu vermeiden. JPS5841032A offenbart eine

Behandlungsmaschine gemäß dem Oberbegriff des Anspruchs 1 und ein Verfahren gemäß dem Oberbegriff des Anspruchs 14.

Es besteht daher Bedarf für Werkzeugträger, mit denen sich wenigstens eines der oben genannten Probleme abmildem oder beseitigen lässt.

Die gestellte Aufgabe wird mit einer Behandlungsmaschine nach Anspruch 1 gelöst. Demnach umfasst diese wenigstens ein stationäres Behandlungsaggregat, ein daran vorbeilaufendes Behälterkarussell mit umfänglich daran verteilten Drehtellern und Zentrierglocken, und den Drehtellern temporär zugeordnete Werkstückträger zum Transport und zur Positionierung von Behältern in der Behandlungsmaschine einer Abfüllanlage, insbesondere in einer Etikettiermaschine oder in einer Direktdruckmaschine. Der Werkstückträger umfasst einen Führungssockel zur insbesondere Drehlage erhaltenden Führung des Werkstückträgers in der Behandlungsmaschine und ein Zentrierstück zum insbesondere drehfesten Abstützen und Zentrieren eines zu behandelnden Behälters sowie eine von unten her durch den Führungssockel zugängliche Antriebswelle. Das Zentrierstück ist im Führungssockel mittels eines Lagers um sich selbst drehbar gelagert und ferner drehfest mit der Antriebswelle verbunden.

Der Führungssockel ermöglicht einen die Drehlage des Werkstückträgers insgesamt erhaltenden Transport durch eine Abfüllanlage. Die von unten her zugängliche Antriebswelle ermöglicht eine einfache Einstellung / Veränderung relativer Drehlagen des Zentrierstücks und des darinsitzenden Behälters bei guter Zugänglichkeit seitlicher Wandbereiche des Behälters für / bei Behandlungen.

Drehlagen im Sinne der vorliegenden Erfindung beziehen sich auf die jeweilige Transportrichtung der Behälter.

Am Führungssockel können beispielsweise Führungselemente zur orthogonalen Transportausrichtung der Behälter und/oder Befestigungsmittel für die Führungselemente in einer definierten Winkellage bezüglich der Transportrichtung und somit zuverlässig außerhalb des Arbeitsbereichs von Behandlungsaggregaten angeordnet werden. Gleichzeitig lässt sich der zentrierte Behälter im Führungssockel präzise bezüglich der Transportrichtung drehen.

Vorzugsweise ist an der Oberseite des Führungssockels wenigstens eine nach oben ragende Säule mit einem davon getragenen Führungsring zur umfänglichen Führung des Behälters angeordnet. Der Behälter lässt sich dann insbesondere auch oberhalb eines zu behandelnden Seitenwandbereichs zentrieren und umfänglich führen. Dadurch kann man auch vergleichsweise kleine und langgestreckte Behälter, wie beispielsweise Probenröhrchen, Spritzenkörper, Ampullen oder dergleichen präzise der Behandlung zuführen.

Bei der Behandlung wird der Behälter von oben her von einer absenkbaren Zentrierglocke zentriert und gegen das Zentrierstück gedrückt. Der Führungsring ermöglicht eine stabile und aufrechte Positionierung des Behälters im Werkstückträger während des Transports in einer Abfüllanlage sowie unmittelbar vor und nach dem Einspannen des Behälters zwischen dem Zentrierstück und einer auf den Behälter abgesenkten Zentrierglocke.

Vorzugsweise ist die wenigstens eine Säule bei dem in Transportrichtung ausgerichteten Führungssockel dem Behälter vorauslaufend und/oder nachlaufend angeordnet. Das heißt, die Säule ist bezogen auf eine nominelle Transportrichtung des Werkstückträgers derart vor und/oder nach dem Behälter angeordnet, dass dieser für eine Behandlung, wie beispielsweise zur Etikettierung und/oder zum Direktbedrucken für das zugeordnete Aggregat quer zur Transportrichtung zugänglich ist. Dadurch lässt sich verhindern, dass die wenigstens eine Säule mit dem Aggregat kollidiert oder die Behandlung behindert.

Vorzugsweise beträgt der lichte Abstand zwischen Zentrierstück und Führungsring wenigstens das doppelte der lichten Weite des Führungsrings. Der Werkstückträger eignet sich dann besonders gut für langgestreckte Behälter mit vergleichsweise kleiner Standfläche und/oder einem gewölbten Behälterboden. Der Führungsring ermöglicht eine stabile umfängliche Führung des Behälters an einem relativ kleinen Teilbereich der Seitenwand. Folglich kann ein vergleichsweise großer Seitenwandbereich, nämlich zwischen Führungsring und Zentrierstück, uneingeschränkt etikettiert oder bedruckt werden.

Vorzugsweise ist das Zentrierstück gegenüber der Antriebswelle nach oben hin und am Führungssockel anschlagend zur gegenseitigen Drehlagenfixierung federnd vorgespannt. Die Drehlagenfixierung erfolgt dann vorzugsweise mittels Reibschluss zwischen dem Zentrierstück und dem Führungssockel. Dadurch lässt sich eine eingestellte Drehlage des Behälters beim Transport durch eine Abfüllanlage bis zum gezielten Lösen der Drehlagenfixierung, beispielsweise durch Absenken einer Zentrierglocke auf den Behälter, zuverlässig einhalten.

Vorzugsweise lässt sich die Drehlagenfixierung durch Herunterdrücken des Zentrierstücks in Richtung der Antriebswelle lösen. Folglich kann die Drehlagenfixierung durch eine von oben auf den Behälter abgesenkte Zentrierglocke gelöst werden. Diese drückt dann den Behälter und das ihn tragenden Zentrierstück nach unten, um eine Drehlagenänderung während eines Behandlungsvorgangs, beispielsweise für eine Etikettierung oder ein Direktbedrucken, zu ermöglichen. Die Drehlagenänderung wird dann mittels der Antriebswelle durch Drehmomentübertragung von einem zugeordneten Drehteller bewirkt.

Vorzugsweise steht die Antriebswelle nach unten hin über den Führungssockel über. Dies erleichtert die Drehmomentübertragung von einem zugeordneten Drehteller einer Behandlungsmaschine auf die Antriebswelle und das damit verbundene Zentrierstück. Beispielsweise kann die Antriebswelle in eine dazu passende Vertiefung des Drehtellers gesetzt werden, um gleichzeitig eine Drehmomentübertragung und eine Zentrierung der Antriebswelle bezüglich des Drehtellers zu bewirken.

Vorzugsweise ist ein unterer Endabschnitt der Antriebswelle als Gegenstück zu einem Drehteller der Behandlungsmaschine ausgebildet. Dadurch lässt sich auf besonders einfache Weise eine Drehmomentübertragung vom Drehteller auf das Zentrierstück mittels Formschluss und/oder Kraftschluss erzielen. Zudem wird eine koaxiale Position von Antriebswelle und Drehteller auf vergleichsweise einfache Weise ermöglicht.

Vorzugsweise ist seitlich am Führungssockel wenigstens eine in Transportrichtung geradlinig verlaufende Führungsfläche zur Drehlage erhaltenden Führung des Werkstückträgers in der Behandlungsmaschine ausgebildet. Die Führungsfläche läuft dann beispielsweise an einer stationären Führungsfläche der Behandlungsmaschine entlang und/oder wird formschlüssig von einer sich mitdrehenden Führung der Behandlungsmaschine in einer vorgegebenen Drehlage gehalten. Die wenigstens eine Führungsfläche am Führungssockel ist vorzugsweise parallel zu einer nominellen Transportrichtung des Werkstückträgers in der Behandlungsmaschine ausgerichtet.

Vorzugsweise ist das Lager ein Wälzlager und insbesondere ein Kugellager. Dadurch lässt sich eine besonders leichtgängige und präzise Lagerung des Zentrierstücks im Führungssockel erzielen. Prinzipiell denkbar wären aber auch Gleitlager und/oder Kombinationen unterschiedlicher Lagertypen.

Vorzugsweise greifen die Drehteller und die Antriebswellen derart ineinander, dass sich die Zentrierstücke mit den Drehtellern koaxial mitdrehen. Damit lassen sich unterschiedliche Behälter mittels daran angepasster Werkstückträger auf denselben Drehtellern der Behandlungsmaschine zentrieren und hinsichtlich ihrer Drehlage platzieren. Somit ist eine gleichermaßen präzise Behandlung und ein flexibler Einsatz der Behandlungsmaschine für unterschiedliche Behälter gegeben.

Vorzugsweise sind am Behälterkarussell Führungen zur Drehlagenfixierung der auf den Drehtellern platzierten Führungssockel angeordnet. Damit lassen sich insbesondere Behälter mit nicht rotationssymmetrischen Merkmalen, wie beispielsweise asymmetrischen Verschlusskappen, Drehlage erhaltend und reproduzierbar behandeln, wie beispielsweise zum Etikettieren oder Bedrucken.

Vorzugsweise sind die Führungen dann innerhalb der Drehteller angeordnet, insbesondere in Form eines sich mit dem Behälterkarussell mitdrehenden Führungssterns. Die Führungen behindern dann eine Behandlung der Behälter seitlich von außen her nicht. Zudem ermöglicht eine sternförmige Konfiguration der Führungen ein einfaches Einschleusen der Werkstückträger mit ihren Führungssockeln in korrespondierend ausgesparte Führungen des Führungssterns.

Vorzugsweise ist die Behandlungsmaschine eine Etikettiermaschine oder Direktdruckmaschine. Der Werkstückträger ist dann besonders vorteilhaft, da hierfür sowohl eine exakte Drehlagenpositionierung als auch eine Behandlung über einen vergleichsweise großen Längenanteil des Behälters gewünscht ist. Das heißt, der Behälter wird nur in einem vergleichsweise kleinen Bereich am Behälterboden und am Öffnungsbereich eingespannt und zentriert. Der Seitenwandbereich dazwischen ist für die Behandlung zugänglich.

Die gestellte Aufgabe wird ebenso mit einem Verfahren nach Anspruch 14 gelöst. Das Verfahren dient dem Transport und der Positionierung von Behältern mittels Werkstückträgern in einer Behandlungsmaschine, insbesondere Etikettiermaschine, einer Abfüllanlage, wobei die Behandlungsmaschine wenigstens ein stationäres Behandlungsaggregat, ein daran vorbeilaufenden Behälterkarussell mit umfänglich daran verteilten Drehtellern und Zentrierglocken umfasst sowie die Werkstückträger. Demnach werden die Werkstückträger den Drehtellem temporär zugeordnet und mittels an den Werkstückträgern ausgebildeter Führungssockel insbesondere Drehlage erhaltend geführt und die Behälter dabei von in den Führungssockeln mittels Lager um sich selbst drehbar gelagerten Zentrierstücken abgestützt und zentriert. Ferner wird die Drehlage der Behälter mittels mit den Zentrierstücken jeweils drehfest verbundenen Antriebswellen von unten her durch die Führungssockel hindurch eingestellt.

Vorzugsweise wird die Drehlage der Behälter dann durch Drehmomentübertragung von an der Behandlungsmaschine vorhandenen Drehtellern auf die Antriebswellen eingestellt.

Vorzugsweise werden die Behälter drehfest in die Zentrierstücke eingesetzt und/oder von diesen geklemmt. Die Drehlage der Behälter bezüglich der Zentrierstücke ändert sich beim Transport und/oder bei der Behandlung dann nicht.

Vorzugsweise tauchen die Behälter zur Abstützung / Zentrierung um bis zu 10 mm und insbesondere nur bis zu 5 mm in die Zentrierstücke ein. Vorzugsweise werden die Behälter dann beim Transport, insbesondere unmittelbar vor / nach dem Einspannen mittels Zentrierglocken, zusätzlich oberhalb eines Etikettierungsbereichs von einem mit dem Führungssockel fest verbundenen Führungsring umfänglich geführt.

Zum Beispiel weisen die Behälter ein Verhältnis ihrer Höhe zu ihrem Durchmesser oder zu ihrer größten Querschnittsweite von wenigstens 4:1 auf. Ergänzend oder alternativ können die Behälter einen nach außen konvex gekrümmten Behälterboden aufweisen.

Vorzugsweise ist dann die Höhe eines Etikettierungsbereichs der Behälter, der beispielsweise zwischen der Oberkante des Zentrierstücks und der Unterkante des Führungsrings definiert ist, größer als die Höhe des in das Zentrierstück eintauchenden Behälterabschnitts und des Verschlussbereichs zusammen.

Vorzugsweise wird die Drehlage der Behälter in den Werkstückträgern beim Transport vor/nach Behandlung mittels nach oben gegen die Führungssockel vorgespannter Federn arretiert und für die Behandlung durch Absenken von Zentrierglocken auf die Behälter und dadurch bewirktes Zusammendrücken der Federn freigegeben.

Die Fixierung der Transportdrehlage bezüglich des Werkstückträgers erfolgt insbesondere an Behältern mit nichtrotationssymmetrischen Merkmalen, wie beispielsweise teilumfänglichen Etikettierungsbereichen und/oder asymmetrischen Verschlusskappen.

Vorzugsweise handelt es sich bei den Behältern um Probenröhrchen, Spritzenkörper, Ampullen oder dergleichen, also um länglich geformte Behälter mit vergleichsweise kleiner oder fehlender Standfläche.

Bevorzugte Ausführungsformen der Erfindung sind zeichnerisch dargestellt. Es zeigen:
- Figur 1: Eine seitliche Ansicht eines Werkstückträgers mit einem Behälter;
- Figur 2: einen Schnitt durch den Werkstückträger und den Behälter quer zur Transportrichtung;
- Figur 3: eine Schrägansicht eines Behälterkarussells mit einem daran umlaufenden Werkstückträger; und
- Figur 4: einen Längsschnitt durch einen Werkstückträger mit Drehlagenfixierung.

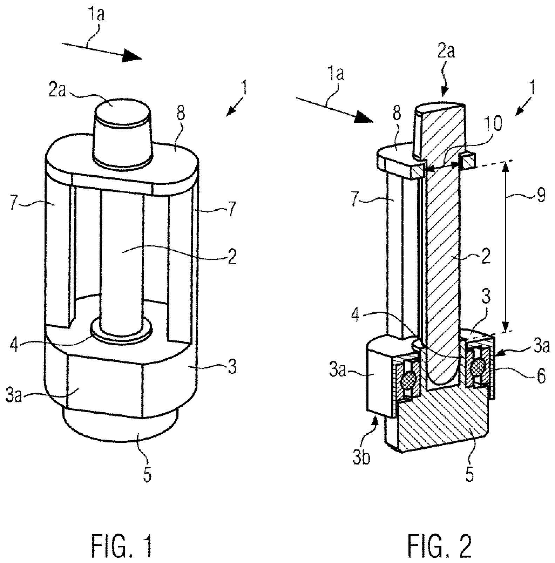

Wie die Figur 1 erkennen lässt, umfasst der Werkstückträger 1 für einen Behälter 2 in einer bevorzugten Ausführungsform einen Führungssockel 3 zur Führung des Werkstückträgers 1 in einer Behandlungsmaschine und ein Zentrierstück 4 zum Abstützen und Zentrieren des Behälters 2. Das Zentrierstück 4 ist drehfest mit einer von unten her durch den Führungssockel 3 zugänglichen Antriebswelle 5 verbunden. Das Zentrierstück 4 und die Antriebswelle 5 können aus einem Stück bestehen. Die Zentrierstücke 4 halten die Behälter 2 beim Transport und bei der Behandlung drehfest.

Wie die Figur 2 ferner erkennen lässt, ist das Zentrierstück 4 und/oder die Antriebswelle 5 mittels eines Lagers 6 um sich selbst drehbar im Führungssockel 3 gelagert. Die Längsachse des zentrierten Behälters 2 fällt dann mit der vertikalen Drehachse des Zentrierstücks 5, der Antriebswelle 5 und des Lagers 6 definitionsgemäß zusammen.

Am Führungssockel 3 sind seitliche Führungsflächen 3a zur Drehlage erhaltenden Führung des Werkstückträgers 1 bezüglich seiner nominellen Transportrichtung 1a ausgebildet.

Ferner ist auf dem Führungssockel 3 vorzugsweise wenigstens eine nach oben ragende Säule 7 mit einem davon getragenen Führungsring 8 für den Behälter 2 ausgebildet und/oder befestigt. Der Führungsring 8 ermöglicht eine umfängliche Seitenführung des Behälters 2 vorzugsweise unterhalb eines Verschlussbereichs 2a des Behälters 2, auf dem beispielsweise eine (schematisch angedeutete) Verschlusskappe sitzt.

Das Zentrierstück 4 ist zur Zentrierung und gegebenenfalls zum Abstützen eines Bodenbereichs 2b des Behälters 2 von unten ausgebildet. Wie die Figur 2 diesbezüglich erkennen lässt, kann der Bodenbereich 2b beispielsweise gekrümmt sein.

Der Führungsring 8 stabilisiert den Behälter 2 beim Transport in aufrechtstehender Lage und insbesondere auch unmittelbar vor und nach dem Absenken einer nicht dargestellten Zentrierglocke auf den Behälter 2, beispielsweise auf dessen Verschlussbereich 2a. Das heißt, während einer Behandlung des Behälters, wie beispielsweise einer Etikettierung oder einem Direktbedrucken, ist der Behälter 2 zwischen dem Zentrierstück 4 und einer von oben auf den Behälter 2 abgesenkten Zentrierglocke eingespannt und zentriert. Insbesondere davor und danach dient der Führungsring 8 einer weitgehend orthogonalen Positionierung des Behälters 2 im Werkstückträger 1 bezüglich seiner Transportrichtung 1a.

Wie die Figur 1 diesbezüglich erkennen lässt, sind vorzugsweise zwei Säulen 7 an dem Führungssockel 3 in Transportrichtung 1a gesehen vor und hinter dem Behälter 2 angeordnet. Folglich ist eine Behandlung von der Seite her, quer zur Transportrichtung 1a, ohne Beeinträchtigung durch die Säulen 7 möglich. Es wäre aber auch prinzipiell denkbar, lediglich eine vorauslaufende oder nachlaufende Säule 7 vorzusehen und/oder eine (nicht dargestellte) Säule, die seitlich von einem zugeordneten Behandlungsaggregat abgewandt, also bei der Behandlung hinter dem Behälter 2, auf dem Führungssockel 3 angeordnet ist.

Der Führungsring 8 ist besonders dann vorteilhaft, wenn der lichte Abstand 9 zwischen dem Führungsring 8 und dem Zentrierstück 4 wenigstens doppelt so groß ist wie die lichte Weite 10 des Führungsrings 8.

Die Antriebswelle 5 steht vorzugsweise nach unten hin über den Führungssockel 3 über, also über dessen untere Stirnfläche 3b hinaus. Dies vereinfacht das Einsetzen des Werkstückträgers 1 / der Antriebswelle 5 in einen zugeordneten Drehteller einer Behandlungsmaschine und/oder eine Drehmomentübertragung vom Drehteller auf die Antriebswelle 5.

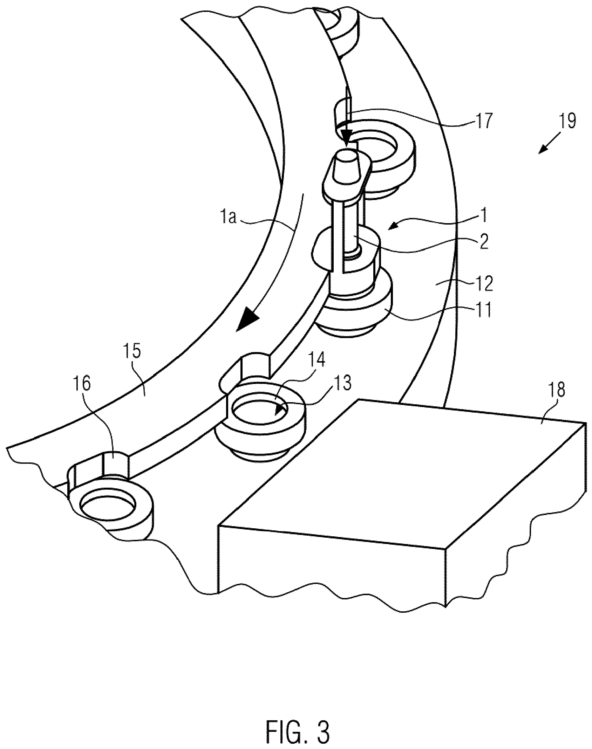

Wie die Figur 3 diesbezüglich erkennen lässt, sind die Drehteller 11 auf an sich bekannte Weise in umfänglich gleichmäßigen Abständen an einem drehbaren Behälterkarussell 12 um sich selbst drehbar gelagert und von (nicht dargestellten) Motoren einzeln angetrieben. An den Drehtellern 11 sind beispielsweise koaxiale Vertiefungen 13 mit einer Zentrierfase 14 oder dergleichen ausgebildet, in die die Antriebswellen 5 selbstzentrierend eingreifen.

Das Behälterkarussell 12 ist vorzugsweise ein Servo-Tisch mit einzeln angetriebenen Motoren. Denkbar ist aber auch ein Riementisch mit Drehtellern 11, die unterhalb ein Riemenrad aufweisen und die Behälter über einen stehenden oder angetriebenen Riemen in Drehung um sich selbst versetzen. Ebenso ist ein Flaschentisch mit mechanischer Tischkurve denkbar, wobei die Drehung der Behälter über ein Zahnsegment mit Kurvenrolle und entsprechenden Tischkurvenverlauf erfolgt.

Der Drehantrieb des Zentrierstücks 4 und des darin eingespannten Behälters 2 erfolgt dann durch Drehmomentübertragung vom Drehteller 11 auf die zentriert in der Vertiefung 13 sitzende Antriebswelle 5 insbesondere mittels Kraftschluss. Ein schlupffreier Kraftschluss zwischen dem Drehteller 11 und der Antriebswelle 5 kann mit dem leichtgängigen Lager 6 zuverlässig erzielt werden.

Schematisch angedeutet ist ferner ein mit dem Behälterkarussell 12 mitdrehender Führungsstern 15, an dem Führungen 16 zur Drehlagenfixierung der Führungssockel 3 ausgebildet sind. Wie die Figur 3 erkennen lässt, stellen die Führungen 16 insbesondere mit den Führungsflächen 3a der Führungssockel 3 einen Formschluss her, der die Drehlage der Führungssockel 3 bezüglich der am Behälterkarussell 12 kreisförmig verlaufenden Transportrichtung 1a festlegt im Sinne einer Drehmomentabstützung der Führungssockel 3 am Behälterkarussell 12. Die nach außen hin offenen Führungen 16 am Führungsstern 15 erleichtern das Einsetzen der Führungssockel 3 in den Führungsstern 15 und der Antriebswellen 5 in die Vertiefungen 13 der Drehteller 11.

Ebenfalls denkbar ist, dass der Führungsstern 15 seitliche Führungen 16 im Wesentlichen in Form außenliegender polygonaler Abflachungen (nicht dargestellt) umfasst. Diese bewirken dann eine Drehlagenfixierung mit korrespondierend abgeflachten Führungsflächen 3a der Führungssockel 3. Auch andere Arten der Drehlagenfixierung, beispielsweise einzeln am Behälterkarussell 12 befestigte Führungen 16, sind zur Drehmomentabstützung der Führungssockel 3 am Behälterkarussell 12 möglich.

Die Übergabe der Werkstückträger 1 mit den zu behandelnden Behältern 2 an die Drehteller 11 und die Führungen 16 erfolgt auf an sich bekannte Weise mit einem Einlaufstern, die Abgabe der Werkstückträger 1 mit den behandelten Behältern 2 entsprechend mit einem Auslaufstern (jeweils nicht dargestellt) oder dergleichen.

Schematisch ist in der Figur 3 das prinzipiell bekannte Absenken einer Zentrierglocke auf den Behälter 2 zum senkrechten Einspannen und Zentrieren bezüglich des Zentrierstücks 4 durch einen Pfeil 17 angedeutet. Die Positionierung und Drehlagenänderung des Behälters 2 zwischen einer Zentrierglocke und einem Zentrierstück für die Behandlung ist prinzipiell bekannt und daher in diesem Zusammenhang nicht näher erläutert.

Schematisch angedeutet ist ferner, dass das Behälterkarussell 12 auf prinzipiell bekannte Weise mit einem stationären Behandlungsaggregat 18 zusammenwirkt als Bestandteile einer Behandlungsmaschine 19, wie beispielsweise einer Etikettiermaschine oder Direktdruckmaschine.

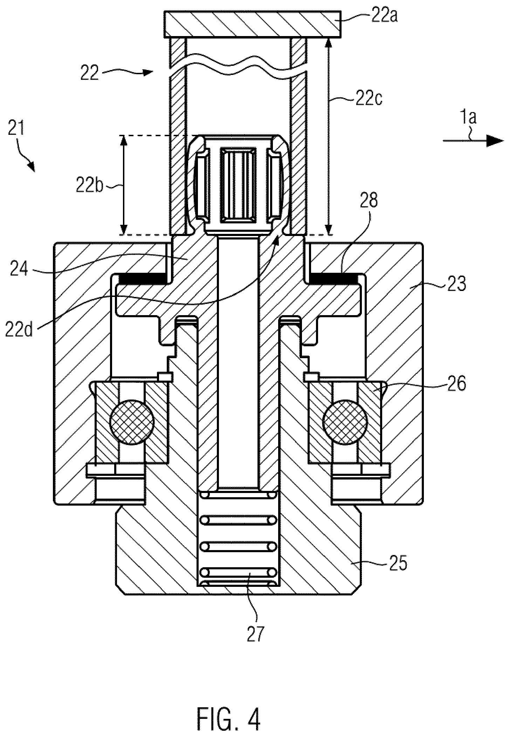

Die Figur 4 zeigt den Werkstückträger 21 gemäß einer zweiten bevorzugten Ausführungsform. Dieser eignet sich insbesondere zur Aufnahme von Behältern 22 mit asymmetrischen Merkmalen, wie beispielsweise einem asymmetrischen Verschlussbereich 22a.

Der Werkstückträger 21 umfasst einen Führungssockel 23 mit (in die Zeichenebene hinein und aus dieser heraus weisenden und im Wesentlichen der ersten Ausführungsform entsprechenden) seitlichen Führungsflächen und ein Zentrierstück 24, welches mit einer Antriebswelle 25 drehfest aber axial beweglich verbunden ist. Das Zentrierstück 24 kann mittels der Antriebswelle 25 und des Lagers 26 bei der Behandlung frei gedreht werden, jedoch ist die Drehlage des Zentrierstücks 24 am Führungssockel 23 beim Transport ansonsten fixiert. Beispielsweise dient die Antriebswelle 25 hierzu als Gegenlager für eine Feder 27, die das Zentrierstück 24 gegen den Führungssockel 23 und/oder eine zum Kraftschluss dazwischen ausgebildete Haftschicht 28 drückt. Diese dient zur Erhöhung der Haftreibung und besteht beispielsweise aus einem Gummi, Silikon oder anderweitig rutschhemmenden Material.

Im von außen unbelasteten Zustand wird das Zentrierstück 24 von der Feder 27 so fest gegen den Führungssockel 23 und/oder die Haftschicht 28 gedrückt, dass sich die Drehlage des Zentrierstücks 24 bezüglich des Führungssockels 23 beim Transport nicht ändert und eine zuvor eingestellte Drehlage des Behälters 22 bis zu dessen Behandlung erhalten bleibt.

Drückt dann beispielsweise eine Zentrierglocke von oben auf den Behälter 22, so wird dieser mit dem Zentrierstück 24 gegen die Federvorspannung der Feder 27 nach unten bezüglich der Antriebswelle 25 verschoben, so dass der die Drehlage fixierende Kontakt zwischen dem Zentrierstück 24 und dem Führungssockel 23 und/oder der Haftschicht 28 verlorengeht. Der Behälter 2 lässt sich dann bezüglich des Führungssockels 23 frei drehen, so dass die Drehlage des Behälters 22 über die Antriebswelle 25 von einem Drehteller 11 gezielt während der Behandlung geändert werden kann.

Es versteht sich hierbei von selbst, dass dann auch die Zentrierglocken freilaufend drehbar gelagert sind. Nichtsdestoweniger wäre es prinzipiell auch denkbar, den Drehantrieb für die Behälter 2 an den Zentrierglocken vorzusehen und die Drehteller 11 freilaufend auszubilden.

Wie die Figuren 2 und 4 im Vergleich erkennen lassen, sind unterschiedliche Prinzipien zur Zentrierung und/oder Abstützung der Behälter 2, 22 an den Zentrierstücken 4, 24 denkbar. Beim außenliegenden Zentrierstück 4 greift der Behälter 2 in dieses ein, wohingegen der Behälter 22 über das innenliegende Zentrierstück 24 gestülpt wird.

Da beim innenliegenden Zentrierstück 24 ein größerer Anteil 22b an der Seitenwandhöhe 22c des Behälters 22 zur Zentrierung und Abstützung der Behälter 22 zur Verfügung steht als beim außenliegenden Zentrierstück 4, kann der Führungsring 8 beim innenliegenden Zentrierstück 24 entbehrlich sein. Das innenliegende Zentrierstück 24 behindert die seitliche Behandlung des Behälters 22 von außen her prinzipiell nicht, beispielsweise bei einer Etikettierung oder einem Bedrucken.

Der in der Figur 4 dargestellte Behälter 22 ist lediglich beispielhaft mit einem obenliegenden asymmetrischen Verschlussbereich 22a / einer asymmetrischen Verschlusskappe und einem offenen unteren Ende 22d dargestellt. Es versteht sich von selbst, dass beliebige stirnseitig offene Behälter, beispielsweise auch auf dem Kopf stehend, mit der jeweiligen Öffnung über ein innenliegendes Zentrierstück 24 gestülpt werden könnten. Die dargestellten Varianten der Behälter 2, 22 sind diesbezüglich lediglich beispielhaft.

Nichtsdestoweniger eignet sich der Werkstückträger 1, 21 besonders für vergleichsweise kleine und länglich geformte Behälter, wie beispielsweise Probenröhrchen, Spritzenkörper, Ampullen oder dergleichen.

Die Behälter 2, 22 können in einer Abfüllanlage auf prinzipiell bekannte Weise auf die Werkstückträger 1, 21 gesetzt werden. Beim anschließenden Transport der Behälter kann deren Drehlage im Werkstückträger 21 so lange fixiert werden, bis die Drehlagenfixierung durch Einwirken einer Zentrierglocke oder dergleichen Mechanismus von oben gezielt gelöst wird. Dies ist insbesondere dann vorteilhaft, wenn die Behälter aufgrund einer asymmetrischen Ausgestaltung, beispielsweise einem asymmetrischen Verschluss oder dergleichen, eine bestimmte Drehlage bei der nachfolgenden Behandlung einnehmen muss.

Die Drehlage insbesondere asymmetrischer Behälter 22 wird beispielsweise bereits beim Einsetzen in den Werkstückträger 21 hergestellt oder danach an einer Ausrichtstation gezielt eingestellt und bleibt beim anschließenden Transport durch die Drehlagenfixierung am Werkstückträger 21 bis zur Behandlung erhalten.

Die beschriebene Drehlagenfixierung ist prinzipiell sowohl mit dem diesbezüglich beispielhaft dargestellten innenliegenden Zentrierstück 24 als auch mit einem außenliegenden Zentrierstück 4 möglich, ebenso mit rotationssymmetrischen Behältern 2 oder dergleichen.

Ferner kann die beschriebene Drehlagenfixierung prinzipiell auch bei einem Werkstückträger 1 mit zusätzlichem Führungsring 8 eingesetzt werden. Es ist dann lediglich ein ausreichender Abstand zwischen dem Verschlussbereich 2a, 22a bzw. der Verschlusskappe des Behälters 2, 22 und dem Führungsring 8 vorzusehen, sodass die Drehlagenfixierung durch Herunterdrücken des Behälters 2, 22 bei dessen Behandlung vorübergehend gelöst werden kann.

Die Führungsflächen an den Führungssockeln 3, 23 ermöglichen eine Drehlage erhaltende Führung des Werkstückträgers 1, 21 beim Transport bis zur Behandlung und eine Drehlagenverankerung der Führungssockel 3, 23 beim Verändern der Drehlage des darin gehaltenen Behälters 2, 22 bei der Behandlung.

## Patentansprüche

1. Behandlungsmaschine (19) für Behälter (2, 22), umfassend: wenigstens ein stationäres Behandlungsaggregat (18); ein daran vorbeilaufendes Behälterkarussell (12) mit umfänglich daran verteilten Drehtellern (11) und Zentrierglocken;
**gekennzeichnet durch** den Drehtellern (11) temporär zugeordnete Werkstückträger (1, 21) für die Behälter (2, 22),
wobei die Werkstückträger (1, 21) einen Führungssockel (3, 23) zur Führung des Werkstückträgers (1, 21) in der Behandlungsmaschine (19), ein Zentrierstück (4, 24) zum Abstützen und Zentrieren eines zu behandelnden Behälters (2, 22) und eine von unten her durch den Führungssockel (3, 23) zugängliche Antriebswelle (5, 25) umfassen, wobei das Zentrierstück (4, 24) im Führungssockel (3, 23) mittels eines Lagers (6, 26) um sich selbst drehbar gelagert und ferner drehfest mit der Antriebswelle (5, 25) verbunden ist.

2. Behandlungsmaschine nach Anspruch 1, wobei am Führungssockel (3) wenigstens eine nach oben ragende Säule (7) mit einem davon getragenen Führungsring (8) zur umfänglichen Führung des Behälters (2) angeordnet ist.

3. Behandlungsmaschine nach Anspruch 2, wobei die wenigstens eine Säule (7) bei geführtem Führungssockel (3) dem Behälter (2) vorauslaufend und/oder nachlaufend angeordnet ist.

4. Behandlungsmaschine nach Anspruch 2 oder 3, wobei der lichte Abstand (9) zwischen Zentrierstück (4) und Führungsring (8) wenigstens das Doppelte der lichten Weite (10) des Führungsrings (8) beträgt.

5. Behandlungsmaschine nach wenigstens einem der vorigen Ansprüche, wobei das Zentrierstück (24) gegenüber der Antriebswelle (25) nach oben hin und am Führungssockel (23) anschlagend zur gegenseitigen Drehlagenfixierung federnd vorgespannt ist, insbesondere zur Drehlagenfixierung mittels Kraftschluss.

6. Behandlungsmaschine nach Anspruch 5, wobei sich die Drehlagenfixierung durch Herunterdrücken des Zentrierstücks (24) gegen die Antriebwelle (25) lösen lässt.

7. Behandlungsmaschine nach wenigstens einem der vorigen Ansprüche, wobei die Antriebswelle (5 ,25) nach unten hin über den Führungssockel (3, 23) übersteht.

8. Behandlungsmaschine nach wenigstens einem der vorigen Ansprüche, wobei ein unterer Endabschnitt der Antriebswelle (5, 25) als Gegenstück zu einem Drehteller (11) der Behandlungsmaschine (19) ausgebildet ist.

9. Behandlungsmaschine nach einem der vorigen Ansprüche, wobei seitlich am Führungssockel (3, 23) wenigstens eine in Transportrichtung (1a) geradlinig verlaufende Führungsfläche (3a) zur Drehlage erhaltenden Führung des Werkstückträgers (1, 21) in der Behandlungsmaschine (19) ausgebildet sind.

10. Behandlungsmaschine nach wenigstens einem der vorigen Ansprüche, wobei das Lager (6, 26) ein Wälzlager und insbesondere ein Kugellager ist.

11. Behandlungsmaschine nach wenigstens einem der vorigen Ansprüche, wobei die Drehteller (11) und Antriebswellen (5 ,25) derart ineinandergreifen, dass sich die Zentrierstücke (4, 24) mit den Drehtellern (11) zentriert mitdrehen.

12. Behandlungsmaschine nach wenigstens einem der vorigen Ansprüche, wobei am Behälterkarussell (12) Führungen (16) zur Drehlagenfixierung der auf den Drehtellern (11) platzierten Führungssockel (3, 23) angeordnet sind.

13. Behandlungsmaschine nach wenigstens einem der vorigen Ansprüche, wobei die Führungen (16) innerhalb der Drehteller (11) angeordnet sind, insbesondere in Form eines sich mit dem Behälterkarussell (12) mitdrehenden Führungssterns (15).

14. Verfahren zum Transport und zur Positionierung von Behältern (2, 22) mittels Werkstückträgern (1, 21) in einer Behandlungsmaschine (19) einer Abfüllanlage, insbesondere in einer Etikettiermaschine oder Direktdruckmaschine, mit wenigstens einem stationären Behandlungsaggregat (18) und einem daran vorbeilaufenden Behälterkarussell (12) mit umfänglich daran verteilten Drehtellern (11) und Zentrierglocken, **dadurch gekennzeichnet, dass** die Werkstückträger (1, 21) den Drehtellern (11) temporär zugeordnet werden und mittels an den Werkstückträgern (1, 21) ausgebildeter Führungssockel (3, 23) insbesondere Drehlage erhaltend geführt werden, wobei die Behälter (2, 22) dabei von einem im Führungssockel (3, 23) mittels eines Lagers (6, 26) um sich selbst drehbar gelagerten Zentrierstück (4, 24) abgestützt und zentriert werden (2, 22), und wobei die Drehlage der Behälter (2, 22) mittels einer mit dem Zentrierstück (4, 24) drehfest verbundenen Antriebswelle (5, 25) von unten her durch den Führungssockel (3, 23) hindurch eingestellt wird.

## Claims

1. A treatment machine (19) for containers (2, 22), comprising:
at least a stationary treatment unit (18);
a container carousel (12) moving past it and including rotary plates (11) and centering bells distributed around its circumference;
**characterized by**
work carriers (1, 21) for the containers (2, 22) temporarily associated to the rotary plates (11), wherein the work carriers (1, 21) comprise a guiding base (3, 23) for guiding the work carrier (1, 21) within the treatment machine (19), a centering member (4, 24) for supporting and centering a container (2, 22) to be treated and a drive shaft (5, 25) accessible from below through the guiding base (3, 23),
wherein the centering member (4, 24) is mounted in the guiding base (3, 23) by means of a bearing (6, 26) to be rotatable about itself and is furthermore non-rotatably connected to the drive shaft (5, 25).

2. The treatment machine according to claim 1, wherein at the guiding base (3) at least one upwardly projecting column (7) including a guide ring (8) carried thereby is arranged for circumferential guidance of the container (2).

3. Treatment machine according to claim 2, wherein the at least one column (7) is arranged to move ahead or behind the container (2) when the guiding base (3) is guided.

4. The treatment machine according to claim 2 or 3, wherein the clearance (9) between the centering member (4) and the guide ring (8) is at least twice the clear diameter (10) of the guide ring (8).

5. The treatment machine according to at least one of the preceding claims, wherein the centering member (24) is resiliently biased upwardly relative to the drive shaft (25) abutting against the guiding base (23) for fixing them in their relative rotational position, in particular by means of friction.

6. Treatment machine according to claim 5, wherein the fixing in rotational position can be released by depressing the centering member (24) against the drive shaft (25).

7. The treatment machine according to at least one of the preceding claims, wherein the drive shaft (5, 25) projects downwardly beyond the guiding base (3, 23).

8. The treatment machine according to at least one of the preceding claims, wherein a lower end portion of the drive shaft (5, 25) is formed as a counterpart to a rotary plate (11) of the treatment machine (19).

9. The treatment machine according to any one of the preceding claims, wherein at least one guide surface (3a) extending linearly in the transport direction (1a) is formed laterally at the guiding base for guiding the work carrier (1, 21) in the treatment machine (19) to maintain the rotational position.

10. The treatment machine according to at least one of the preceding claims, wherein the bearing (6, 26) is a rolling bearing and in particular a ball bearing.

11. The treatment machine according to at least one of the preceding claims, wherein the rotary plates (11) and drive shafts (5, 25) mesh so that the centering members (4, 24) rotate centered with the rotary plates (11).

12. The treatment machine according to at least one of the preceding claims, wherein guides (16) are arranged on the container carousel (12) for fixing the rotational positions of the guiding bases (3, 23) placed on the rotary plates (11).

13. The treatment machine according to at least one of the preceding claims, wherein the guides (16) are arranged inside the rotary plates (11), in particular in the form of a star wheel (15) rotating along with the container carousel (12).

14. A method for transporting and positioning containers (2, 22) by means of work carriers (1, 21) in a treatment machine (19) of a filling plant, in particular a labelling machine or direct printing machine, comprising at least a stationary treatment unit (18) and a container carousel (12) moving past it and including rotary plates (11) and centering bells distributed around its circumference;
**characterized in that**
the work carriers (1, 21) are temporarily associated to the rotary plates (11) and are guided by means of guiding bases (3, 23) formed on the work carriers (1, 21), in particular for maintaining their rotational position, wherein the containers (2, 22) are supported and centered by means of a centering member (4, 24) supported via a bearing (6, 26) within the guiding base (3, 23) so as to be rotatable about itself, and wherein the rotational position of the containers (2, 22) is adjusted by means of a drive shaft (5, 25) non-rotatably connected to the centering member (4, 24) from below through the guiding base (3, 23).

## Revendications

1. Machine de manipulation (19) pour des récipients (2, 22), comprenant : au moins un groupe de manipulation stationnaire (18) ; un carrousel de récipients (12) passant devant ledit groupe, avec des plateaux tournants (11) et des cloches de centrage distribués circonférentiellement ;
**caractérisée par** des porte-pièce (1, 21) pour les récipients (2, 22), associés temporairement aux plateaux tournants (11),
dans laquelle les porte-pièce (1, 21) comportent un socle de guidage (3, 23) pour le guidage du porte-pièce (1, 21) dans la machine de manipulation (19), un élément de centrage (4, 24) pour supporter et centrer un récipient à manipuler (2, 22), et un axe d'entraînement (5, 25) accessible par le bas à travers le socle de guidage (3, 23),
dans laquelle l'élément de centrage (4, 24) est supporté de manière rotative autour de son axe dans le socle de guidage (3, 23) au moyen d'un palier (6, 26) et est en outre connecté de façon solidaire en rotation avec l'axe d'entraînement (5, 25).

2. Machine de manipulation selon la revendication 1, dans laquelle au moins une colonne (7) ressortant vers le haut est agencée sur le socle de guidage (3) avec une bague de guidage (8) portée par la colonne pour un guidage circonférentiel du récipient (2).

3. Machine de manipulation selon la revendication 2, dans laquelle ladite au moins une colonne (7) est agencée en avant et/ou en arrière du récipient (2) lorsque le socle de guidage (3) est déplacé.

4. Machine de manipulation selon la revendication 2 ou 3, dans laquelle la distance libre (9) entre l'élément de centrage (4) et la bague de guidage (8) est au moins égale au double de la largeur libre (10) de la bague de guidage (8) .

5. Machine de manipulation selon au moins l'une des revendications précédentes, dans laquelle l'élément de centrage (24) est précontraint de manière élastique vers le haut par rapport à l'axe d'entraînement (25) et vient à butée contre le socle de guidage (23) pour un blocage mutuel de la position de rotation, en particulier pour un blocage de la position de rotation par un verrouillage à friction.

6. Machine de manipulation selon la revendication 5, dans laquelle le blocage de la position de rotation est libéré par un enfoncement de l'élément de centrage (24) contre l'axe d'entraînement (25).

7. Machine de manipulation selon au moins l'une des revendications précédentes, dans laquelle l'axe d'entraînement (5 ,25) ressort par le bas du socle de guidage (3, 23).

8. Machine de manipulation selon au moins l'une des revendications précédentes, dans laquelle une section terminale inférieure de l'axe d'entraînement (5, 25) est constituée comme contre-pièce d'un plateau tournant (11) de la machine de manipulation (19).

9. Machine de manipulation selon l'une des revendications précédentes, dans laquelle au moins une surface de guidage (3a) s'étendant en ligne droite dans la direction de transport (1a) est pourvue latéralement sur le socle de guidage (3, 23) pour le guidage du porte-pièce (1, 21) dans la machine de manipulation (19) tout en maintenant la position de rotation.

10. Machine de manipulation selon au moins l'une des revendications précédentes, dans laquelle le palier (6, 26) est un roulement mécanique, et en particulier un roulement à billes.

11. Machine de manipulation selon au moins l'une des revendications précédentes, dans laquelle les plateaux tournants (11) et les axes d'entraînement (5 ,25) s'assemblent de telle sorte que les éléments de centrage (4, 24) tournent conjointement avec les plateaux tournants (11) de manière centrée.

12. Machine de manipulation selon au moins l'une des revendications précédentes, dans laquelle des guidages (16) pour fixer la position de rotation des socles de guidage (3, 23) placés sur les plateaux tournants (11) sont agencés sur le carrousel de récipients (12).

13. Machine de manipulation selon au moins l'une des revendications précédentes, dans laquelle les guidages (16) sont agencés à l'intérieur des plateaux tournants (11), en particulier sous la forme d'une étoile de guidage (15) tournant avec le carrousel de récipients (12).

14. Procédé de transport et de positionnement de récipients (2, 22) au moyen de porte-pièce (1, 21) dans une machine de manipulation (19) d'une installation de remplissage, en particulier dans une machine d'étiquetage ou une machine d'impression directe, avec au moins un groupe de manipulation stationnaire (18) et un carrousel de récipients (12) passant devant ledit groupe avec des plateaux tournants (11) et des cloches de centrage distribués circonférentiellement,
**caractérisé en ce que** les porte-pièce (1, 21) sont associés temporairement aux plateaux tournants (11) et sont guidés au moyen de socles de guidage (3, 23) formés sur les porte-pièce (1, 21), en particulier en maintenant la position de rotation, dans lequel les récipients (2, 22) sont supportés et centrés (2, 22) par un élément de centrage (4, 24) monté de manière rotative autour de son axe dans le socle de guidage (3, 23) au moyen d'un palier (6, 26), et dans lequel la position de rotation des récipients (2, 22) est réglée par le bas à travers le socle de guidage (3, 23) au moyen d'un axe d'entraînement (5, 25) relié de façon solidaire en rotation à l'élément de centrage (4, 24).
